# EUROPEAN PATENT APPLICATION

(11) **EP 1 246 219 A1**
(43) Date of publication of application: **02.10.2002**
(21) Application number: 01810303.6
(22) Date of filing: 26.03.2001
(51) Int. Cl.: H01J 1/304

(54) **Cold field emission device**

(71) Applicant: ABB RESEARCH LTD., 8050 Zürich (CH)
(72) Inventor: Fuhrmann, Henning, 8047 Zürich (CH); Carlen, Martin, 5443 Niederrohrdorf (CH); Dirix, Yvo, 8057 Zürich (CH); Kaltenborn, Uwe, 5453 Remetschwil (CH); Glatz-Reichenbach, Joachim, 5400 Baden (CH)
(74) Representative: ABB Patent Attorneys

(57) **Abstract**

An Electrode structure (1) for a cold field emission device with a conductor (10) and a plurality of nanotubes (11) arranged on the conductor (10), the nanotubes containing metal oxide such as vanadiumoxide, tinoxide and titaniumdioxide, is disclosed.

## Description

### 1. Field of the invention

The invention relates to a cold field emission device using nanotubes. Applications of such cold field emitters are flat panel displays, gas discharge tubes, field indicators and electron sources for electron beams and x-rays.

### 2. Description of the Prior Art

Flat-panel displays are of increasing interest for various applications such as television screens, computer monitors and mobile phones. Recently, the feasibility of high-brightness flat panel displays using field emission of electrons from carbon nanotubes has been demonstrated. This technique is taking advantage of the field enhancement that occurs at the tip of structures with a large aspect ratio when exposed to an electric field. Carbon nanotubes are well suited as electrode coating, since they have very high aspect ratios and can withstand large current densities. The application of carbon nanotubes for field-emission displays has recently been patented [US6097138].

Also, the use of carbon- or BCN nanotubes as emitters for electron sources has been patented recently [US5773834]. In this case, the electrons emitted from a single nanotube are used in electron optical systems, taking advantage of the high brightness delivered by the small emitter tip.

### 3. Drawback of the Prior Art

The main disadvantage of using carbon nanotubes for field-emission displays is that the production of suitable carbon nanotubes requires ineffective high-temperature routes in vacuum systems and yield a maximum of some grams/day. Published synthesis methods having higher yields either do not produce suitable nanotubes or would require complicated and costly purification and modification of the raw product. Additionally, carbon nanotubes are not easily dispersed in solvents. This makes it difficult to obtain a homogeneous distribution of carbon nanotubes in matrix, as it would be useful for a contacting member. It is also advantageous to have uncapped nanotubes, because field enhancement is higher at the sharp edges of uncapped tubes. Although uncapping carbon nanotubes is feasible, it requires additional processing steps during which nanotubes are lost. Finally, existing production methods for carbon nanotubes are expensive laboratory-level processes yielding grams per day. Most of these processes are very difficult to upscale.

### 4. Summary of the Invention

The present invention proposes to use metal-oxide nanotubes for field-emission applications. Recently, vanadiumoxide nanotubes have been shown to have a structure similar to that of multiwalled carbon nanotubes. They consist of a rolled-up sheet of vanadiumoxide and an organic template between the layers. The synthesis of transition metal oxide nanotubes can be done wet-chemically via low-temperature routes and has a much higher yield than processes for the production of carbon nanotubes. Vanadiumoxide nanotubes are easily soluble in some organic solvents, and our experiments have shown that they can be dispersed in a polymeric matrix. Additionally, vanadiumoxide nanotubes can be produced as capped or uncapped structures by a simple variation of the production process. It is also possible to exchange the organic template found between the tube layers for metal ions by a simple chemical process. Possibly, this will permit the electrical and magnetic properties of the tubes to be tailored according to the needs of a given application. It may also be possible to bind functional groups to the organic template and then use these for selective or structured adsorption of the nanotubes on a substrate.

The price for material made in a laboratory-level process is about ten times lower than the price of the cheapest carbon nanotube material. It is expected to decrease further, since upscaling is easier than for carbon nanotube processes. A method for the production of metal oxide nanotubes is disclosed in WO9826871. Metaloxide nanotubes are conductive at room temperature. With diameters in the 15-100 nm range and lengths of up to 2000 nm, the aspect ratio of these semimetallic structures makes them attractive for field-emission applications. Experiments on the emission properties of Vanadium Oxide nanotubes have been performed. Field emission patterns were observed on a phosphorous screen even though the orientation of the nanotubes on the silicon substrate was far from ideal.

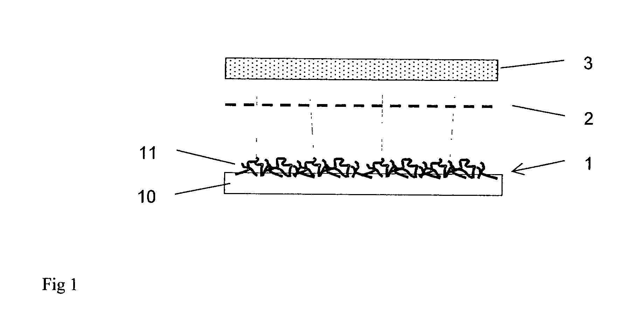

The basic principle of using metaloxide nanotubes as cold field emitters is shown in Fig. 1, for the example of a flat panel display application. A first electrode structure 1 consists of a conductor (substrate) 10, on which the nanotubes 11 are arranged. When a voltage is applied between the conductor 10 and the second electrode 2, field emission of electrons occurs at the tips of some of the nanotubes 11. The electrons are transmitted through the grid of the second electrode 2 and produce light when hitting the screen 3.

### 5. List of reference signs

- 1: Electrode structure
- 10: Conductor
- 11: Nanotubes
- 2: Second electrode
- 3: Screen

## Claims

1. Electrode structure (1) for a cold field emission device with a conductor (10) and a plurality of nanotubes (11) arranged on the conductor (10), **characterized in that** the nanotubes (11) comprise metal oxide.

2. Electrode structure according to claim 1, **characterized in that** the metal oxide is one of the group consisting of vanadiumoxide, tinoxide and titaniumdioxide.
